# EUROPEAN PATENT SPECIFICATION

(11) **EP 2 557 851 B1**
(45) Date of publication and mention of the grant of the patent: **08.08.2018**
(21) Application number: 10852702.9
(22) Date of filing: 11.06.2010
(51) Int. Cl.: H04L 29/06, H04W 28/06

(54) **METHOD AND TERMINAL FOR BOOTING AND STOPPING COMPRESSED MODE**
VERFAHREN UND ENDGERÄT ZUM STARTEN UND BEENDEN EINES KOMPRIMIERTEN MODUS
PROCÉDÉ ET TERMINAL POUR DÉMARRER ET ARRÊTER UN MODE COMPRESSÉ

(43) Date of publication of application: 13.02.2013
(73) Proprietor: ZTE Corporation, Guangdong Province 518057 (CN)
(72) Inventor: KE, Yazhu, Shenzhen City Guangdong Province 518057 P.R. China (CN); CHENG, Xiang, Shenzhen City Guangdong Province 518057 P.R. China (CN); LIU, Lin, Shenzhen City Guangdong Province 518057 P.R. China (CN)
(74) Representative: Murgitroyd & Company
(86) International application number: PCT/CN2010/073825
(87) International publication number: WO 2011/153709

(56) References cited:
- CN-A- 1 365 205
- CN-A- 1 464 665
- CN-A- 1 595 858
- CN-A- 1 790 992
- CHRISTOPHER BRUNNER ET AL: "Inter-System Handover Parameter Optimization", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 28 September 2006 (2006-09-28), pages 1-6, XP031051240, ISBN: 978-1-4244-0062-1
- "3rd Generation Partnership Project; Technical Specification Group Radio Access Network; Radio Resource Control (RRC); Protocol specification (Release 9)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.1, 29 April 2010 (2010-04-29), pages 1-1784, XP050441454, [retrieved on 2010-04-29]
- "3rd Generation Partnership Project; Technical Specification Group Radio Access Network; Physical layer; Measurements (FDD) (Release 9)", 3GPP STANDARD; 3GPP TS 25.215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 30 March 2010 (2010-03-30), pages 1-23, XP050402117, [retrieved on 2010-03-30]

## Description

### Technical Field

The present invention relates to the field of wireless communication, and in particular, to a method and user equipment for starting and stopping a compressed mode in a high speed downlink packet access system.

### Background Art

With the continuous evolution of communication wireless network technology, from the second-generation GSM (Global System Mobile) system to the third-generation WCDMA (Wideband Code Division Multiple Access) system, and then to the third-generation E-UTRAN (Enhanced Universal Radio Access Network) system, the network deployment of the operator has to include the situation of co-existence of multiple standard systems according to the users' requirement. Currently the common wireless network functions of the operator are designed as: the second-generation GSM system is mainly used to bear voice, the third-generation WCDMA system is mainly used to bear packet domain services and services of session type and video type, and the third-generation E-UTRAN system is mainly for bearing ultra high-speed packet domain services.

Therefore, for the existing network deployment, the inter-system mobility of the second-generation GSM system and the third-generation WCDMA system is very important; moreover, in the near future, the mobility management for the third-generation E-UTRAN, for example switching to the hot-point area of the E-UTRAN system, will also become important. Meanwhile, inter-frequency switching based on load balance between carrier frequencies of various layers is also necessary in a network of multi-carrier frequency networking.

In all switching processes caused by the above inter-system mobility management and load balance between carrier frequencies of various layers, it needs to measure the destination system and the destination carrier frequency during the preceding switching preparation stage so as to make a switching decision accurately.

The compressed mode plays an important role in the inter-carrier frequency and inter-system measurement. When the compressed mode is used, the user equipment can measure non-serving carrier frequencies and carrier frequencies of other system without having to be configured with dual receivers. When a user equipment only configured with one receiver moves from the third-generation WCDMA system to an area only covered by the second-generation GSM system, the inter-system measurement can only be implemented by using the compressed mode. Likewise, the compressed mode can also be applied to a situation where the user equipment moves into and out from the multi-carrier frequency coverage area of the third-generation WCDMA system. In the compressed mode, the user equipment can measure another non-serving carrier frequency without losing any data being transmitted on the serving carrier frequency.

The compress mode is defined as a transmission mode, by which, data transmission will be compressed in the time domain to generate one transmission gap. The receiver of the user equipment can be tuned to another carrier frequency for measurement by using this transmission gap.

The transmission gap is described and determined by "transmission gap pattern sequence". Each set of "transmission gap pattern sequence" is uniquely identified by a "transmission gap pattern sequence identifier", and can only be applied to one "transmission gap pattern sequence measurement usage", i.e. one measurement usage in various measurements of "frequency division duplex measurement"/ "time division duplex measurement"/ "GSM carrier Received Signal Strength Indication measurement" / "GSM base station identity color code initial identification" / "GSM base station identity color code identification reconfirmation" / "multi-carrier frequency measurement" / "E-UTRA (Enhanced Universal Radio Access) measurement".

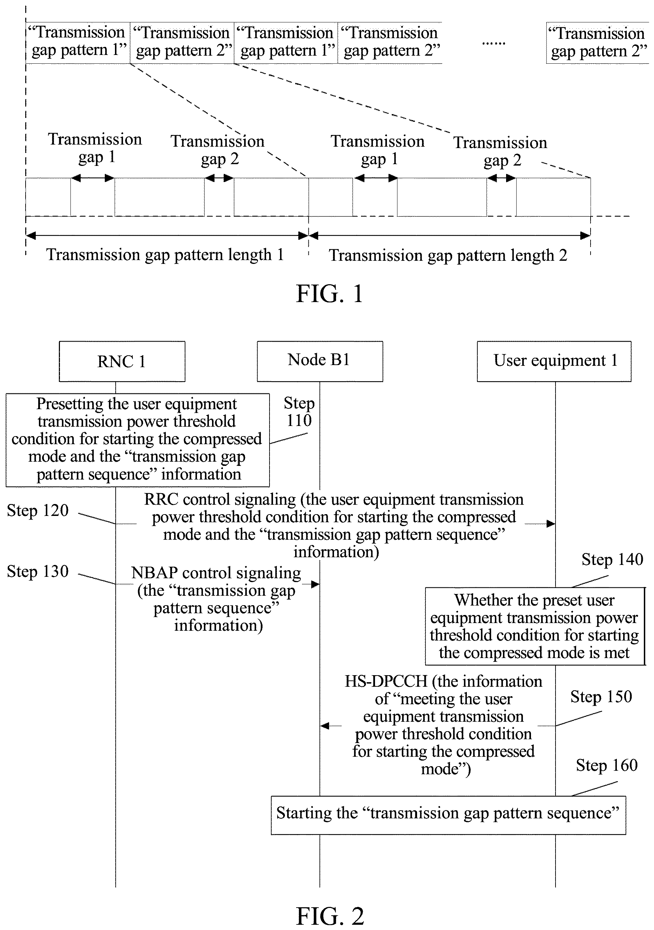

Each set of "transmission gap pattern sequence" is as shown in FIG. 1, and includes two alternate "transmission gap pattern 1" and "transmission gap pattern 2". Each type of "transmission gap pattern" provides one or two transmission gaps within one "transmission gap pattern length". In addition, each set of "transmission gap pattern sequence" may further include a CFN (Connection Frame Number) for indicating the time of starting/stopping the compressed mode and the number of times of repetition of transmission gap patterns and so on. These parameters are all determined based on the "transmission gap pattern sequence measurement usage".

In the related art, the power for controlling starting and stopping the compressed mode is given to a Radio Network Controller (RNC). The Radio Network Controller judges whether to implement inter-carrier frequency/inter-system measurement, for example the radio signal quality of the current serving cell where a certain user equipment is located is not good, and it may need to switch the user equipment to an adjacent cell of inter-carrier frequency/inter-system, then it needs to notify the user equipment to perform inter-carrier frequency/inter-system measurement. If it needs to perform inter-carrier frequency/inter-system measurement, the Radio Network Controller informs a Node B and the user equipment of the started "transmission gap pattern sequence". The Node B does not transmit data in the transmission gaps described and determined by the "transmission gap pattern sequence", and the user equipment does not receive data in the transmission gaps described and determined by the "transmission gap pattern sequence" and performs inter-carrier frequency/inter-system measurement of the "transmission gap pattern sequence measurement usage". After the Radio Network Controller obtains the measurement result of the inter-carrier frequency/inter-system measurement of the user equipment, it can determine to stop the "transmission gap pattern sequence" and inform the Node B and the user equipment. The Node B and the user equipment exit from the compressed mode and transmit and receive data normally. An example of the prior art is disclosed by document "Inter-System Handover Parameter Optimization" of CHRISTOPHER BRUNNER ET AL, 2006 IEEE 64TH VEHICULAR TECHNOLOGY CONFERENCE: VTC 2006-FALL;25-28 SEPTEMBER 2006, MONTREAL, QUEBEC, CANADA, PISCATAWAY, NJ:IEEE OPERATIONS CENTER, XP031051240, ISBN:978-1-4244-0062-1.

### Summary of the Invention

In the related art, on one hand, the processing procedure for starting and stopping the compressed mode is relatively long, and it commonly needs to start the compressed mode beforehand in the engineering, i.e. the threshold for starting the compressed mode should be set to be easily triggered so as to ensure that there can be enough time to perform inter-carrier frequency/inter-system measurement before the user equipment has a call drop (i.e. during the time period of maintaining the user equipment in conversation). Thus, the coverage boundary of the cell will be caused to be smaller, the cell coverage cannot be efficiently used, and the duration time of the compressed mode is very long, which also has negative influence on the capacity of the system and the throughput of the user. On the other hand, the radio network controller judges whether to perform inter-carrier frequency/inter-system measurement, and it determines whether the quality of radio signal of the current serving cell where the user equipment is located is good or not through the user equipment measuring the signal quality of the received pilot in downstream direction, i.e. only the radio coverage status of downlink is taken into consideration. However, it is found in the practical network operation that the phenomena of unbalance of uplink and downlink coverage may exist in the current serving cell where the user equipment is located. This is because the interference of the uplink is greater than that of downlink, and the transmission power of the user equipment is limited, so there commonly exists the case that the uplink coverage is smaller than the downlink coverage. Thus, if whether to start the compressed mode to perform inter-carrier frequency/inter-system measurement is only determined by judging the received pilot in the downstream direction, there will possibly cause the problem that in the scene where the uplink coverage is smaller than the downlink coverage, the uplink coverage of the user equipment is limited but the downlink coverage is good, and the quality of received pilot in the downstream direction is good, and the compressed mode cannot be started in time to perform inter-carrier frequency/inter-system measurement, so there is no sufficient time and information for performing the switching process, and the conversation cannot be maintained, causing occurrence of call drop.

The technical problem to be solved in the present invention is to provide a method and user equipment for starting and stopping a compressed mode as defined in the independent claims, to overcome the problem in the related art that the process of starting and stopping the compressed mode is relatively long, and only the radio coverage status of downlink is taken into consideration.

In order to solve the above technical problem, a method for starting and stopping a compressed mode is provided, comprising the following steps of:
a ratio network controller presetting a threshold condition of starting the compressed mode and informing a user equipment; wherein, the threshold condition of starting the compressed mode is a threshold condition based on transmission power of the user equipment;
the user equipment monitoring whether itself meets the threshold condition of starting the compressed mode, and informing a Node B when the threshold condition of starting the compressed mode is met; and
the user equipment and Node B starting the compressed mode.

Preferably, the threshold condition of starting the compressed mode comprises a user equipment transmission power threshold value of starting the compressed mode;
the step of the user equipment monitoring whether itself meets the threshold condition and informing a Node B when the threshold condition is met comprises: the user equipment monitoring whether its transmission power is greater than or equal to the user equipment transmission power threshold value, and if yes, informing the Node B.

Preferably, the threshold condition of starting the compressed mode comprises the user equipment transmission power threshold value of starting the compressed mode and duration time;
the step of the user equipment monitoring whether itself meets the threshold condition and informing a Node B when the threshold condition is met comprises: the user equipment monitoring whether its transmission power is greater than or equal to the user equipment transmission power threshold value and is kept for the duration time, and if yes, informing the Node B.

Preferably, the method further comprises:
the radio network controller determining information of a transmission gap pattern sequence used when the compressed mode is started, and informing the Node B and the user equipment of the information; or
the user equipment and the Node B reaching an agreement in advance on the information of the transmission gap pattern sequence used when the compressed mode is started.

Preferably, the radio network controller informs the user equipment of the threshold condition and the information of the transmission gap pattern sequence through a radio resource control (RRC) protocol layer control signaling;
the radio network controller informs the Node B of the information of the transmission gap pattern sequence through a Node B application portion (NBAP) protocol layer control signaling.

Preferably, the step of informing the Node B when the threshold condition is met comprises:
when the threshold condition is met, the user equipment sending information for indicating that the threshold condition is met to the Node B through a high-speed dedicated physical control channel (HS-DPCCH); or,
when the threshold condition is met, the user equipment sending starting information for indicating that the transmission gap pattern sequence is started to the Node B through the HS-DPCCH.

Preferably, after the user equipment sends information for indicating that the threshold condition is met to the Node B and before the user equipment and the Node B starts the compressed mode, the method further comprises:
the Node B sending the starting information for indicating that the transmission gap pattern sequence is started to the user equipment through a high-speed shared control channel order of a high-speed shared control channel (HS-SCCH).

Preferably, the step of the user equipment and the Node B starting the compressed mode comprises:
the user equipment and the Node B generating a transmission gap according to the information of the transmission gap pattern sequence; and, the user equipment performing measurement in the transmission gap.

Preferably, after the user equipment starts the compressed mode, the method further comprises:
after the user equipment completes measurement, the user equipment sending stopping information for indicating that the transmission gap pattern sequence is stopped to the Node B through the HS-DPCCH;
the user equipment and the Node B stopping the compressed mode.

In order to solve the above technical problem, a method for stopping a compressed mode is also provided, comprising:
a ratio network controller presetting a threshold condition of stopping the compressed mode and informing a user equipment; wherein, the threshold condition of stopping the compressed mode is a threshold condition based on transmission power of the user equipment;
after the user equipment starts the compressed mode, the user equipment monitoring whether itself meets the threshold condition, and informing a Node B when the threshold condition is met; and
the user equipment and Node B stopping the compressed mode.

Preferably, the threshold condition of stopping the compressed mode comprises a user equipment transmission power threshold value of stopping the compressed mode;
the step of the user equipment monitoring whether itself meets the threshold condition and informing a Node B when the threshold condition is met comprises: the user equipment monitoring whether its transmission power is less than or equal to the user equipment transmission power threshold value, and if yes, informing the Node B.

Preferably, the threshold condition of stopping the compressed mode comprises the user equipment transmission power threshold value of stopping the compressed mode and duration time;
the step of the user equipment monitoring whether itself meets the threshold condition and informing a Node B when the threshold condition is met comprises: the user equipment monitoring whether its transmission power is less than or equal to the user equipment transmission power threshold value and is kept for the duration time, and if yes, informing the Node B.

Preferably, the step of informing the Node B when the threshold condition is met comprises:
when the threshold condition is met, the user equipment sending information for indicating that the threshold condition is met to the Node B through a high-speed dedicated physical control channel (HS-DPCCH); or,
when the threshold condition is met, the user equipment sending stopping information for indicating that a transmission gap pattern sequence is stopped to the Node B through the HS-DPCCH.

Preferably, after the user equipment sends the information for indicating that the threshold condition is met to the Node B through the HS-DPCCH physical channel and before the user equipment and the Node B stops the compressed mode, the method further comprises:
the Node B sending the stopping information for indicating that the transmission gap pattern sequence is stopped to the user equipment through a high-speed shared control channel order of a high-speed shared control channel (HS-SCCH).

In order to solve the above technical problem, a user equipment is also provided, comprising: a monitoring module and a compressed mode module, wherein:
the monitoring module is configured to receive a threshold condition of starting a compressed mode preset by a ratio network controller, monitor whether itself meets the threshold condition of starting the compressed mode, and inform a Node B and the compressed mode module when the threshold condition of starting the compressed mode is met; wherein, the threshold condition of starting the compressed mode is a threshold condition based on transmission power of a user equipment;
the compressed mode module is configured to start the compressed mode according to a notification of the monitoring module.

Preferably, the monitoring module is further configured to receive a threshold condition of stopping the compressed mode preset by the ratio network controller, monitor whether itself meets the threshold condition of stopping the compressed mode, and inform a Node B and the compressed mode module when the threshold condition of stopping the compressed mode is met; wherein, the threshold condition of stopping the compressed mode is a threshold condition based on transmission power of the user equipment;
the compressed mode module is configured to stop the compressed mode according to a notification of the monitoring module.

Preferably, the monitoring module is further configured to inform the Node B and the compressed mode module when the compressed mode module completes measurement, after the compressed mode module starts the compressed mode;
the compressed mode module is further configured to stop the compressed mode according to a notification of the monitoring module.

The present invention has the following beneficial effects:
1. the processing flow is shortened, without the complicated overlapping interaction processing between the radio network controller/Node B/user equipment in the related art, and the compressed mode can be started in a very short time, and the inter-carrier frequency/inter-system measurement can be started as fast as possible.
2. the uplink coverage situation is taken into consideration to solve the problem of unbalance of uplink and downlink coverage in the practical network operation, thus avoiding call drop.

### Brief Description of Drawings

FIG. 1 illustrates the "transmission gap pattern sequence";
FIG. 2 illustrates the processing procedure in Example One of the present invention;
FIG. 3 illustrates the processing procedure in Example Two of the present invention;
FIG. 4 illustrates the processing procedure in Example Three of the present invention;
FIG. 5 illustrates the processing procedure in Example Four of the present invention;
FIG. 6 illustrates the processing procedure in Example Five of the present invention;
FIG. 7 illustrates the processing procedure in Example Six of the present invention;
FIG. 8 illustrates the user equipment according to an example of the present invention.

### Preferred Embodiments of the Invention

The basic concept of the present invention is that, a ratio network controller presets a threshold condition of starting the compressed mode and informs a user equipment of the threshold condition, and the user equipment starts the compressed mode when the threshold condition of starting the compressed mode is met; and/or, the ratio network controller presets a threshold condition of stopping the compressed mode and informs a user equipment of the threshold condition; the user equipment stops the compressed mode when the threshold condition of stopping the compressed mode is met, or the user equipment stops the compressed mode when completing measurement; the scheme can shorten the processing flow and takes the uplink coverage status into consideration, thereby solving the defects of the above aspects existing in the engineering application.

Specifically, the procedure of starting the compressed mode comprises:
Step 1, a ratio network controller presets a threshold condition of starting the compressed mode and informs a user equipment of the threshold condition; wherein, the threshold condition of starting the compressed mode is a threshold condition based on transmission power of the user equipment;
   the threshold condition of starting the compressed mode comprises a user equipment transmission power threshold value of starting the compressed mode and duration time;
   in addition, the radio network controller determines information of a transmission gap pattern sequence used when the compressed mode is started, and informs the Node B and the user equipment of the information; or, the user equipment and the Node B reach an agreement in advance on the information of the transmission gap pattern sequence used when the compressed mode is started;
   the transmission gap pattern sequence can be one or more sets, and it is uniquely identified with a transmission gap pattern sequence identifier;
   wherein, information of each set of transmission gap pattern sequence at least comprises: transmission gap pattern sequence identifier information, transmission gap pattern sequence measurement usage information, transmission gap pattern 1 and/or transmission gap pattern 2 information, and information of the transmission gap provided by each transmission gap pattern during one transmission gap pattern length; it further comprises: information of the number of times of repetition of transmission gap patterns;
   the radio network controller informs the user equipment through a RRC (Radio Resource Control) protocol layer control signaling, and the radio network controller informs the Node B through a NBAP (Node B Application Part) protocol layer control signaling;
Step 2, the user equipment monitors whether itself meets the threshold condition of starting the compressed mode, and informs the Node B when the threshold condition of starting compressed mode is met;
   specifically, this step can be: the user equipment monitoring whether its transmission power is greater than or greater than or equal to the user equipment transmission power threshold value of starting the compressed mode, and if yes, informing the Node B; or the user equipment monitoring whether its transmission power is greater than or greater than or equal to the user equipment transmission power threshold value of starting the compressed mode and is kept for the duration time, and if yes, informing the Node B;
   in this step, specifically, the user equipment sends the information for indicating that the threshold condition is met to the Node B through a HS-DPCCH (high-speed dedicated physical control channel) physical channel; or, the user equipment sends the information for indicating that the threshold condition is met to the Node B through the HS-DPCCH physical channel, and then the Node B sends starting information for indicating that the transmission gap pattern sequence is started to the user equipment through a high-speed shared control channel order of a high-speed shared control channel (HS-SCCH); or, the user equipment sends starting information for indicating that the transmission gap pattern sequence is started to the Node B through HS-DPCCH physical channel;
Step 3, the user equipment and Node B start the compressed mode;
   specifically, the user equipment and the Node B generate a transmission gap according to the information of the transmission gap pattern sequence; and, the user equipment performs measurement in the transmission gap.

Specifically, the procedure of stopping the compressed mode may be as follows:
Method one:
   after the user equipment starts the compressed mode, and when completing measurement, the user equipment informs the Node B; the user equipment and the Node B stop the compressed mode;
   specifically, the user equipment sends the stopping information for indicating that a transmission gap pattern sequence is stopped to the Node B through the HS-DPCCH physical channel to notify the Node B to stop the compressed mode.
Method two:
   Step 1, a ratio network controller presets a threshold condition of stopping the compressed mode and informing a user equipment of the threshold condition; wherein, the threshold condition of stopping the compressed mode is a threshold condition based on transmission power of the user equipment;
      the threshold condition of stopping the compressed mode comprises a user equipment transmission power threshold value of stopping the compressed mode and can also comprise duration time;
   Step 2, after the user equipment starts the compressed mode, the user equipment monitors whether itself meets the threshold condition for stopping the compressed mode and informs a Node B when the threshold condition is met; and
      specifically, this step can be: the user equipment monitoring whether its transmission power is less than or less than or equal to the user equipment transmission power threshold value of stopping the compressed mode, and if yes, informing the Node B; or the user equipment monitoring whether its transmission power is less than or less than or equal to the user equipment transmission power threshold value of stopping the compressed mode and is kept for the duration time, and if yes, informing the Node B;
      in this step, specifically, the user equipment sends the information for indicating that the threshold condition is met to the Node B through a HS-DPCCH physical channel; or, the user equipment sends the information for indicating that the threshold condition is met to the Node B through the HS-DPCCH physical channel, and then the Node B sends stopping information for indicating that the transmission gap pattern sequence is stopped to the user equipment through a high-speed shared control channel order of a HS-SCCH physical channel; or, the user equipment sends stopping information for indicating that the transmission gap pattern sequence is stopped to the Node B through a HS-DPCCH physical channel;
   Step 3, the user equipment and Node B stop the compressed mode;
      specifically, the Node B and the user equipment exit from the compressed mode, stop generating transmission gaps according to the information of the transmission gap pattern sequence, and transmit and receive data normally.

The technical scheme of the present invention will be described in detail below with reference to the drawings and examples.

The HS-DPCCH physical channel is a control channel in the upstream direction and is used to bear feedback information of downlink data receiving status that it is acknowledged or not acknowledged that downlink data is received successfully and bear quality feedback information of downlink data receiving quality.

In the HS-DPCCH physical channel, the domain for bearing the quality feedback information of downlink data receiving quality is called as "channel quality indication field". The "channel quality indication field" is composed of 5 bits, and its value range is from 1 to 32. The value of 1-30 has already been used in the related art. Values of 31 and 32 will be used in the following examples.

The HS-SCCH physical channel is used to bear information required by HS-DSCH (High Speed Downlink Shared Channel) demodulation, and it is a control channel in the downstream direction. The Node B can send "HS-SCCH order" to the user equipment through the HS-SCCH physical channel to order the user equipment to perform the corresponding control.

The HS-SCCH order has three bits to indicate the type of the HS-SCCH order and has three bits to indicate the specific HS-SCCH order of this type. Only two types of HS-SCCH orders with values of 1 and 2 are used in the related art. New types of HS-SCCH orders with values of 2 and 3 will be used in the following examples.

In addition, the examples of the present invention use:
RRC protocol layer control signaling, which is a control signaling provided by the RRC protocol layer between the radio network controller and user equipment;
NBAP protocol layer control signal, which is a control signaling provided by the NBAP protocol layer between the radio network controller and Node B.

### Example one

The processing procedure of Example one is as shown in FIG. 2, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "meeting the user equipment transmission power threshold condition for starting the compressed mode".

Step 110, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to the "user equipment transmission power threshold for starting the compressed mode", it is considered that the user equipment transmission power threshold condition for starting the compressed mode is met.

The radio network controller determines the "transmission gap pattern sequence" information of the compressed mode started after the user equipment transmission power threshold condition for starting the compressed mode is met, which specifically comprises:
a set of "transmission gap pattern sequence" is used for measurement usage of "frequency division duplex measurement", and the "transmission gap pattern sequence" is identified by the identifier 1. This set of "transmission gap pattern sequence" 1 comprises two alternate "transmission gap pattern 1" and "transmission gap pattern 2". Each type of "transmission gap pattern" provides one transmission gap within one "transmission gap pattern length". It further comprises that the number of times of repetition of this set of "transmission gap pattern sequence" 1 is 20.

Step 120, the radio network controller 1 informs the user equipment 1, through a RRC protocol layer control signaling, of the user equipment transmission power threshold condition for starting the compressed mode and the "transmission gap pattern sequence" information of the compressed mode started after the user equipment transmission power threshold condition for starting the compressed mode is met.

Step 130, the radio network controller 1 informs the Node B1, through a NBAP protocol layer control signaling, of the "transmission gap pattern sequence" information of the compressed mode started after the user equipment transmission power threshold condition for starting the compressed mode is met.

Step 140, the user equipment 1 monitors whether its user equipment transmission power meets the preset user equipment transmission power threshold condition for starting the compressed mode, and if yes, proceed to step 150.

Step 150, the user equipment 1 sends the information of "meeting the user equipment transmission power threshold condition for starting the compressed mode" to Node B1 through the HS-DPCCH physical channel. The information of "meeting the user equipment transmission power threshold condition for starting the compressed mode" is indicated by the value of 31 in the "channel quality indication field" of the HS-DPCCH physical channel.

Step 160, the user equipment 1 and Node B1 generate transmission gaps according to the description of the started "transmission gap pattern sequence" (whose identifier is 1). And, the user equipment 1 performs "frequency division duplex measurement" during the transmission gap.

### Example two

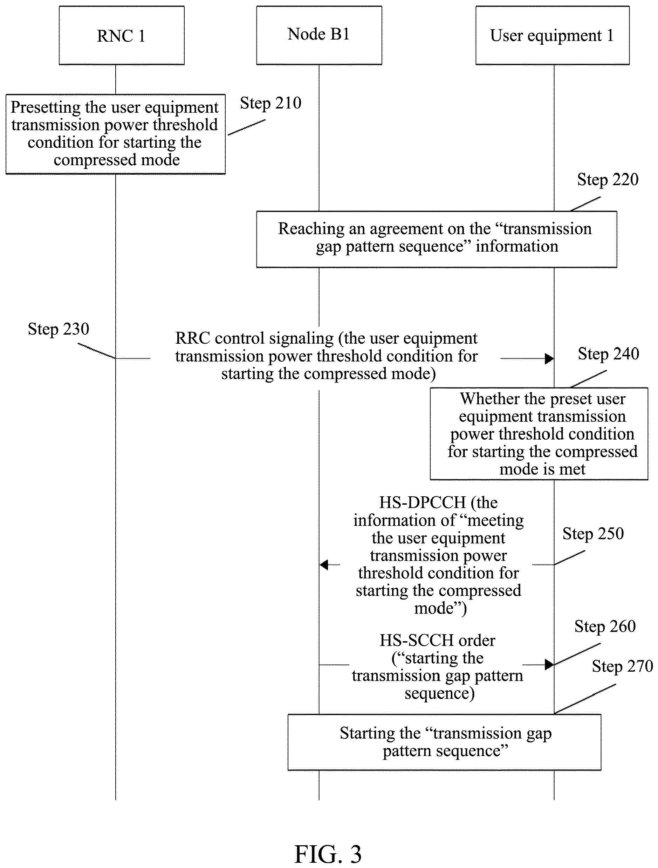

The processing procedure of Example two is as shown in FIG. 3, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "meeting the user equipment transmission power threshold condition for starting the compressed mode". In the HS-SCCH orders of HS-SCCH physical channel, the new type of HS-SCCH order with a value of 2 represents "starting the transmission gap pattern sequence" information.

Step 210, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to this "user equipment transmission power threshold for starting the compressed mode", it is considered that the user equipment transmission power threshold condition for starting the compressed mode is met.

Step 220, the user equipment 1 and Node B1 reach an agreement in advance on the "transmission gap pattern sequence" information of the compressed mode started after the user equipment transmission power threshold condition for starting the compressed mode is met, which specifically comprise:
three sets of "transmission gap pattern sequence", which are:
"transmission gap pattern sequence" with an identifier of 5, which is used for measurement usage of "GSM carrier Received Signal Strength Indication measurement";
"transmission gap pattern sequence" with an identifier of 6, which is used for measurement usage of "GSM base station identity color code initial identification";
"transmission gap pattern sequence" with an identifier of 7, which is used for measurement usage of "GSM base station identity color code identification reconfirmation".

These three sets of "transmission gap pattern sequence" 5/6/7 all comprise two alternate "transmission gap pattern 1" and "transmission gap pattern 2", and each type of "transmission gap pattern" provides two transmission gaps within one "transmission gap pattern length".

It may further comprise that the number of times of repetition of these three sets of "transmission gap pattern sequences" 5/6/7 is 60.

Step 230, the radio network controller 1 informs the user equipment 1, through a RRC protocol layer control signaling, of the user equipment transmission power threshold condition for starting the compressed mode.

Step 240, the user equipment 1 monitors whether its user equipment transmission power meets the preset user equipment transmission power threshold condition for starting the compressed mode, and if yes, proceed to step 250.

Step 250, the user equipment 1 sends the information of "meeting the user equipment transmission power threshold condition for starting the compressed mode" to Node B1 through the HS-DPCCH physical channel. The information of "meeting the user equipment transmission power threshold condition for starting the compressed mode" is indicated by a value of 31 in the "channel quality indication field" of the HS-DPCCH physical channel.

Step 260, the Node B1 sends the "starting the transmission gap pattern sequence" information to the user equipment 1 through an HS-SCCH order of the HS-SCCH physical channel. The "starting the transmission gap pattern sequence" information is indicated by the new type of HS-SCCH order with a value of 2.

Step 270, the user equipment 1 and Node B1 generate transmission gaps according to the description of the started "transmission gap pattern sequences" (whose identifiers are 5/6/7). And, the user equipment 1 performs "GSM carrier Received Signal Strength Indication measurement" / "GSM base station identity color code initial identification" / "GSM base station identity color code identification reconfirmation" measurement during the transmission gap.

### Example three

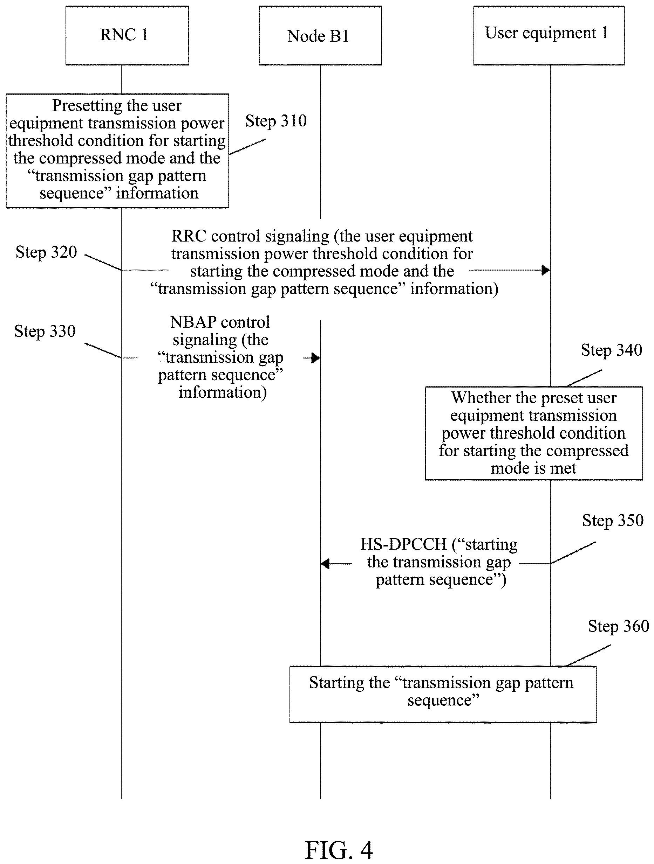

The processing procedure of Example three is as shown in FIG. 4, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "starting the transmission gap pattern sequence".

Step 310, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to the "user equipment transmission power threshold for starting the compressed mode" for the duration time of two seconds, it is considered that the user equipment transmission power threshold condition for starting the compressed mode is met.

The radio network controller determines the "transmission gap pattern sequence" information of the compressed mode started after the user equipment transmission power threshold condition for starting the compressed mode is met, which specifically comprises:
a set of "transmission gap pattern sequence" is used for measurement usage of "frequency division duplex measurement", and the "transmission gap pattern sequence" is identified by the identifier 1. This set of "transmission gap pattern sequence" 1 comprises two alternate "transmission gap pattern 1" and "transmission gap pattern 2". Each type of "transmission gap pattern" provides one transmission gap within one "transmission gap pattern length". It may further comprise the number of times of repetition of this set of "transmission gap pattern sequence" 1 is 20.

Step 320, the radio network controller 1 informs the user equipment 1, through a RRC protocol layer control signaling, of the user equipment transmission power threshold condition for starting the compressed mode and the "transmission gap pattern sequence" information of the compressed mode started after the user equipment transmission power threshold condition for starting the compressed mode is met.

Step 330, the radio network controller 1 informs the Node B1, through a NBAP protocol layer control signaling, of the "transmission gap pattern sequence" information of the compressed mode started after the user equipment transmission power threshold condition for starting the compressed mode is met.

Step 340, the user equipment 1 monitors whether its user equipment transmission power meets the preset user equipment transmission power threshold condition for starting the compressed mode, and if yes, proceed to step 350.

Step 350, the user equipment 1 sends the "starting the transmission gap pattern sequence" information to Node B1 through a HS-DPCCH physical channel. The "starting the transmission gap pattern sequence" information is indicated by the value of 31 in the "channel quality indication field" of the HS-DPCCH physical channel.

Step 360, the user equipment 1 and Node B1 generate transmission gaps according to the description of the started "transmission gap pattern sequence" (whose identifier is 1). And, the user equipment 1 performs "frequency division duplex measurement" during the transmission gap.

### Example four

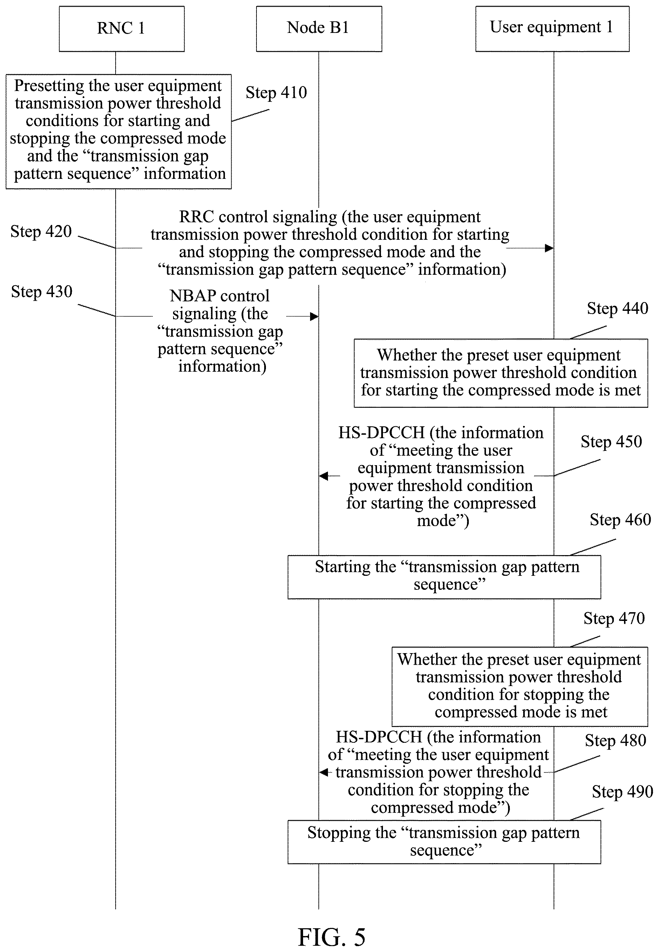

The processing procedure of Example four is as shown in FIG. 5, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "meeting the user equipment transmission power threshold condition for starting the compressed mode", and the value of 32 in the "channel quality indication field" means "meeting the user equipment transmission power threshold condition for stopping the compressed mode".

Step 410, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to the "user equipment transmission power threshold for starting the compressed mode", it is considered that the user equipment transmission power threshold condition for starting the compressed mode is met.

The ratio network controller 1 presets the user equipment transmission power threshold condition for stopping the compressed mode, which is: "the user equipment transmission power threshold condition for stopping the compressed mode" is 0.18 W, and when the transmission power of the user equipment 1 itself is less than or less than or equal to the "user equipment transmission power threshold for stopping the compressed mode", it is considered that the user equipment transmission power threshold condition for stopping the compressed mode is met.

The radio network controller determines the "transmission gap pattern sequence" information of the compressed mode started after the user equipment transmission power threshold condition for starting the compressed mode is met, which specifically comprises:
a set of "transmission gap pattern sequence" is used for measurement usage of "frequency division duplex measurement", and the "transmission gap pattern sequence" is identified by the identifier 1. This set of "transmission gap pattern sequence" 1 comprises two alternate "transmission gap pattern 1" and "transmission gap pattern 2". Each type of "transmission gap pattern" provides one transmission gap within one "transmission gap pattern length". It may further comprise the number of times of repetition of this set of "transmission gap pattern sequence" 1 is 20.

Step 420, the radio network controller 1 informs the user equipment 1, through a RRC protocol layer control signaling, of the user equipment transmission power threshold condition for starting the compressed mode and the "transmission gap pattern sequence" information of the compressed mode started after the user equipment transmission power threshold condition for starting the compressed mode is met, as well as the user equipment transmission power threshold condition for stopping the compressed mode.

Step 430, the radio network controller 1 informs the Node B1, through a NBAP protocol layer control signaling, of the "transmission gap pattern sequence" information of the compressed mode started after the user equipment transmission power threshold condition for starting the compressed mode is met.

Step 440, the user equipment 1 monitors whether its user equipment transmission power meets the preset user equipment transmission power threshold condition for starting the compressed mode, and if yes, proceed to step 450.

Step 450, the user equipment 1 sends the information of "meeting the user equipment transmission power threshold condition for starting the compressed mode" to Node B1 through the HS-DPCCH physical channel. The information of "meeting the user equipment transmission power threshold condition for starting the compressed mode" is indicated by a value of 31 in the "channel quality indication field" of the HS-DPCCH physical channel.

Step 460, the user equipment 1 and Node B1 generate transmission gaps according to the description of the started "transmission gap pattern sequence" (whose identifier is 1). And, the user equipment 1 performs "frequency division duplex measurement" during the transmission gap.

Step 470, the user equipment 1 monitors whether its user equipment transmission power meets the preset user equipment transmission power threshold condition for stopping the compressed mode, and if yes, proceed to step 480.

Step 480, the user equipment 1 sends the information of "meeting the user equipment transmission power threshold condition for stopping the compressed mode" to Node B1 through the HS-DPCCH physical channel. The information of "meeting the user equipment transmission power threshold condition for stopping the compressed mode" is indicated by a value of 32 in the "channel quality indication field" of the HS-DPCCH physical channel.

Step 490, the user equipment 1 and Node B1 stop "transmission gap pattern sequence" (identifier is 1) (i.e. stop generating transmission gaps according to the "transmission gap pattern sequence" information, and transmit and receive data normally).

### Example five

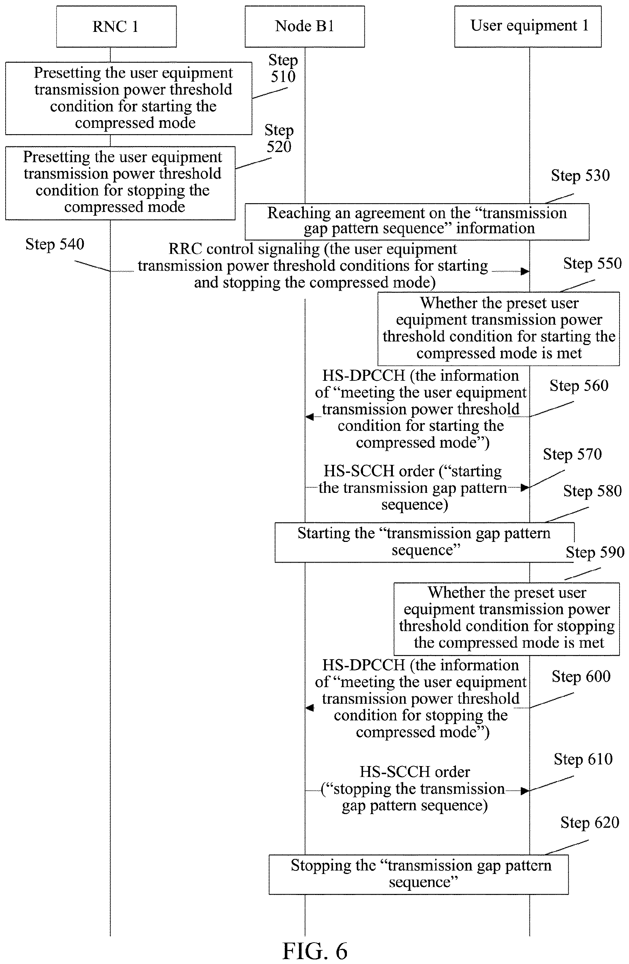

The processing procedure of Example five is as shown in FIG. 6, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "meeting the user equipment transmission power threshold condition for starting the compressed mode", and the value of 32 in the "channel quality indication field" means "meeting the user equipment transmission power threshold condition for stopping the compressed mode". In the HS-SCCH orders of HS-SCCH physical channel, the new type of HS-SCCH order with a value of 2 represents "starting the transmission gap pattern sequence" information, and the new type of HS-SCCH order with a value of 3 represents "stopping the transmission gap pattern sequence" information.

Step 510, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to the "user equipment transmission power threshold for starting the compressed mode", it is considered that the user equipment transmission power threshold condition for starting the compressed mode is met.

Step 520, the ratio network controller 1 presets the user equipment transmission power threshold condition for stopping the compressed mode, which is: "the user equipment transmission power threshold for stopping the compressed mode" is 0.18 W, and when the transmission power of the user equipment 1 itself is less than or less than or equal to the "user equipment transmission power threshold for stopping the compressed mode", it is considered that the user equipment transmission power threshold condition for stopping the compressed mode is met.

Step 530, the user equipment 1 and Node B1 reach an agreement in advance on the "transmission gap pattern sequence" information of the compressed mode started after the user equipment transmission power threshold condition for starting the compressed mode is met, which specifically comprises:
three sets of "transmission gap pattern sequence", which are:
"transmission gap pattern sequence" with an identifier of 5, is used for measurement usage of "GSM carrier Received Signal Strength Indication measurement";
"transmission gap pattern sequence" with an identifier of 6, is used for measurement usage of "GSM base station identity color code initial identification";
"transmission gap pattern sequence" with an identifier of 7, is used for measurement usage of "GSM base station identity color code identification reconfirmation".

These three sets of "transmission gap pattern sequence" 5/6/7 all comprise two alternate "transmission gap pattern 1" and "transmission gap pattern 2", and each type of "transmission gap pattern" provides two transmission gaps within one "transmission gap pattern length".

It may further comprise the number of times of repetition of these three sets of "transmission gap pattern sequences" 5/6/7.

Step 540, the radio network controller 1 informs the user equipment 1, through a RRC protocol layer control signaling, of the user equipment transmission power threshold condition for starting the compressed mode and the user equipment transmission power threshold condition for stopping the compressed mode.

Step 550, the user equipment 1 monitors whether its user equipment transmission power meets the preset user equipment transmission power threshold condition for starting the compressed mode, and if yes, proceed to step 560.

Step 560, the user equipment 1 sends the information of "meeting the user equipment transmission power threshold condition for starting the compressed mode" to Node B1 through HS-DPCCH physical channel. The information of "meeting the user equipment transmission power threshold condition for starting the compressed mode" is indicated by a value of 31 in the "channel quality indication field" of the HS-DPCCH physical channel.

Step 570, the Node B1 sends the "starting the transmission gap pattern sequence" information to the user equipment 1 through an HS-SCCH order of the HS-SCCH physical channel. The "starting the transmission gap pattern sequence" information is indicated by the new type of HS-SCCH order with a value of 2.

Step 580, the user equipment 1 and Node B1 generate transmission gaps according to the description of the started "transmission gap pattern sequences" (whose identifiers are 5/6/7). And, the user equipment 1 performs "GSM carrier Received Signal Strength Indication measurement" / "GSM base station identity color code initial identification" / "GSM base station identity color code identification reconfirmation" measurement during the transmission gap.

Step 590, the user equipment 1 monitors whether its user equipment transmission power meets the preset user equipment transmission power threshold condition for stopping the compressed mode, and if yes, proceed to step 600.

Step 600, the user equipment 1 sends the information of "meeting the user equipment transmission power threshold condition for stopping the compressed mode" to Node B1 through the HS-DPCCH physical channel. The information of "meeting the user equipment transmission power threshold condition for stopping the compressed mode" is indicated by a value of 32 in the "channel quality indication field" of the HS-DPCCH physical channel.

Step 610, the Node B1 sends the "stopping the transmission gap pattern sequence" information to the user equipment 1 through an HS-SCCH order of the HS-SCCH physical channel. The "stopping the transmission gap pattern sequence" information is indicated by the new type of HS-SCCH order with a value of 3.

Step 620, the user equipment 1 and Node B1 stop "transmission gap pattern sequence" (identifier is 5/6/7) (i.e. stop generating transmission gaps according to the "transmission gap pattern sequence" information, and transmit and receive data normally).

### Example six

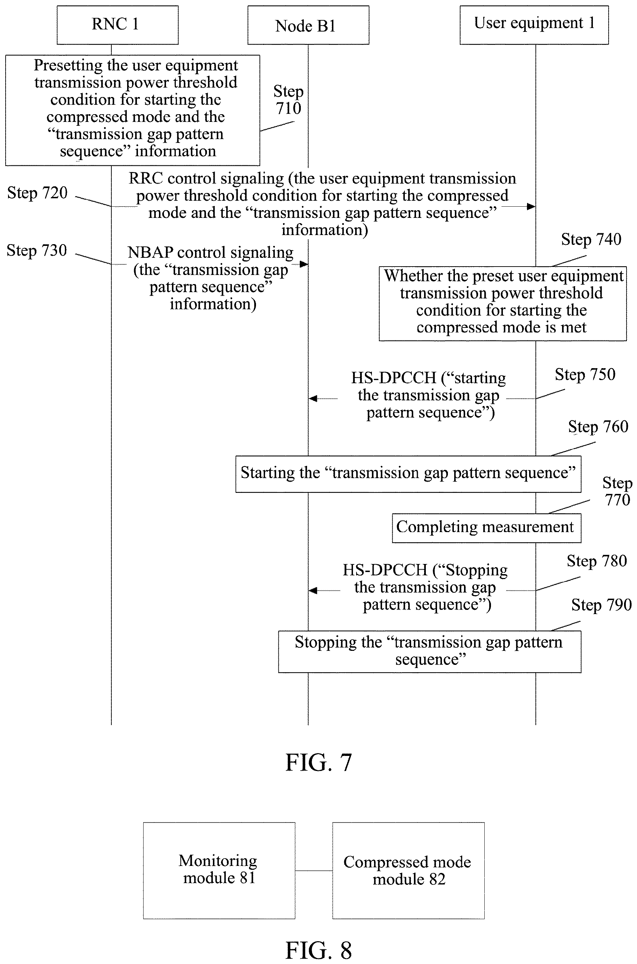

The processing procedure of Example six is as shown in FIG. 7, and each step will be described as follows:
Set scene: user equipment 1 is located in cell 1, cell 1 belongs to Node B1, and Node B1 is connected with radio network controller 1. Radio network controller 1 is responsible for radio connection between user equipment 1 and UTRAN, i.e. it is the serving radio network controller of user equipment 1. In the HS-DPCCH physical channel, the value of 31 in the "channel quality indication field" means "starting the transmission gap pattern sequence", and the value of 32 in the "channel quality indication field" means "stopping the transmission gap pattern sequence".

Step 710, the ratio network controller 1 presets the user equipment transmission power threshold condition for starting the compressed mode, which is: "the user equipment transmission power threshold for starting the compressed mode" is 0.2 W, and when the transmission power of the user equipment 1 itself is greater than or greater than or equal to the "user equipment transmission power threshold for starting the compressed mode" for the duration time of two seconds, it is considered that the user equipment transmission power threshold condition for starting the compressed mode is met.

The radio network controller determines the "transmission gap pattern sequence" information of the compressed mode started after the user equipment transmission power threshold condition for starting the compressed mode is met, which specifically comprises:
a set of "transmission gap pattern sequence" is used for measurement usage of "frequency division duplex measurement", and the "transmission gap pattern sequence" is identified by the identifier 1. This set of "transmission gap pattern sequence" 1 comprises two alternate "transmission gap pattern 1" and "transmission gap pattern 2". Each type of "transmission gap pattern" provides one transmission gap within one "transmission gap pattern length". It may further comprise that the number of times of repetition of this set of "transmission gap pattern sequence" 1 is 20.

Step 720, the radio network controller 1 informs the user equipment 1, through a RRC protocol layer control signaling, of the user equipment transmission power threshold condition for starting the compressed mode and the "transmission gap pattern sequence" information of the compressed mode started after the user equipment transmission power threshold condition for starting the compressed mode is met.

Step 730, the radio network controller 1 informs the Node B1, through a NBAP protocol layer control signaling, of the "transmission gap pattern sequence" information of the compressed mode started after the user equipment transmission power threshold condition for starting the compressed mode is met.

Step 740, the user equipment 1 monitors whether its user equipment transmission power meets the preset user equipment transmission power threshold condition for starting the compressed mode, and if yes, proceed to step 750.

Step 750, the user equipment 1 sends the "starting the transmission gap pattern sequence" information to Node B1 through a HS-DPCCH physical channel. The "starting the transmission gap pattern sequence" information is indicated by a value of 31 in the "channel quality indication field" of the HS-DPCCH physical channel.

Step 760, the user equipment 1 and Node B1 generate transmission gaps according to the description of the started "transmission gap pattern sequence" (whose identifier is 1). And, the user equipment 1 performs "frequency division duplex measurement" during the transmission gap.

Step 770, the user equipment 1 completes the "frequency division duplex measurement".

Step 780, the user equipment 1 sends the "stopping the transmission gap pattern sequence" information to Node B1 through a HS-DPCCH physical channel. The "stopping the transmission gap pattern sequence" information is indicated by a value of 32 in the "channel quality indication field" of the HS-DPCCH physical channel.

Step 790, the user equipment 1 and Node B1 stop "transmission gap pattern sequence" (identifier is 1) (i.e. stop generating transmission gaps according to the "transmission gap pattern sequence" information, and transmit and receive data normally).

A processing system for a compressed mode according to an example of the present invention comprises the radio network controller, user equipment and Node B as described above, wherein,
the radio network controller is configured to preset a threshold condition of starting the compressed mode and informing a user equipment of the threshold condition; wherein, the threshold condition of starting the compressed mode is a threshold condition based on transmission power of the user equipment;
the user equipment is configured to monitor whether itself meets the threshold condition of starting the compressed mode, and inform a Node B when the threshold condition of starting compressed mode is met, and start the compressed mode;
the Node B is configured to start the compressed mode according to a notification of the user equipment.

The ratio network controller is further configured to preset a threshold condition of stopping the compressed mode and informing a user equipment of the threshold condition; wherein, the threshold condition of stopping the compressed mode is a threshold condition based on transmission power of the user equipment;
the user equipment is further configured to: after starting the compressed mode, monitor whether itself meets the threshold condition of stopping the compressed mode, and inform a Node B when the threshold condition is met, and stop the compressed mode;
or, the user equipment is further configured to: after starting the compressed mode, inform the Node B when measurement is completed, and stop the compressed mode;
the Node B is configured to stop the compressed mode according to a notification of the user equipment.

The functions that can be implemented by the above radio network controller, user equipment and Node B are described in the above method, which will not be repeated here.

As shown in FIG. 8, the user equipment in the example of the present invention comprises a monitoring module 81 and a compressed mode module 82, wherein:
the monitoring module 81 is configured to receive a threshold condition of starting a compressed mode preset by a ratio network controller, monitor whether itself meets the threshold condition of starting the compressed mode, and inform a Node B and the compressed mode module 82 when the threshold condition of starting the compressed mode is met; wherein, the threshold condition of starting the compressed mode is a threshold condition based on transmission power of a user equipment;
the compressed mode module 82 is configured to start the compressed mode according to a notification of the monitoring module 81.

The monitoring module 81 is further configured to receive a threshold condition of stopping the compressed mode preset by the ratio network controller, monitor whether itself meets the threshold condition of stopping the compressed mode after the compressed mode module 82 starts the compressed mode, and inform a Node B and the compressed mode module 82 when the threshold condition of stopping the compressed mode is met; wherein, the threshold condition of stopping the compressed mode is a threshold condition based on transmission power of the user equipment;
or, the monitoring module 81 is further configured to inform the Node B and the compressed mode module 82 when the compressed mode module 82 completes measurement, after the compressed mode module 82 starts the compressed mode;
the compressed mode module 82 is further configured to stop the compressed mode according to a notification of the monitoring module 81.

A person having ordinary skill in the art can understand that all of part of the steps of the above method may be implemented by instructing related hardware with a program, which may be stored in a computer-readable medium, such as a read-only memory, a magnetic disk or an optical disk. Optionally, all of part of the steps of the above examples may also be implemented by using one or more integrated circuits. Correspondingly, each module/unit in the above examples may be implemented in the form of hardware, or in the form of software functional modules. The present invention is not limited to any particular form of combination of hardware and software.

Although the present invention is described in conjunction with particular examples, a person having ordinary skill in the art can make modifications and transformations to the present invention without departing from the scope of the present invention. Such modifications and transformations are regarded to be within the scope of the present invention and the scope of the appended claims.

### Industrial Application

The present invention provides a method and user equipment for starting and stopping a compressed mode, wherein, when the compressed mode is required to be started, the compressed mode can be started in a very short time, without the complicated overlapping interaction processing between the radio network controller/Node B/user equipment in the related art, and the inter-carrier frequency/inter-system measurement can be started as fast as possible; moreover, the uplink coverage situation is taken into consideration in the present invention to solve the problem of unbalance of uplink and downlink coverage in the practical network operation, thus avoiding call drop.

## Claims

1. A method for starting and stopping a compressed mode, comprising:
a ratio network controller presetting (110, 210, 310, 410, 510, 710) a threshold condition of starting the compressed mode and informing (120, 230, 320, 420, 540, 710) a user equipment; wherein, the threshold condition of starting the compressed mode is a threshold condition based on transmission power of the user equipment;
the user equipment monitoring (140, 240,340, 440, 550, 740) whether the user equipment meets the threshold condition of starting the compressed mode, and informing (150, 250, 350, 450, 560, 750) a Node B when the threshold condition of starting the compressed mode is met;
the user equipment and the Node B reaching (220, 530) an agreement in advance on the information of the transmission gap pattern sequence used when the compressed mode is started; and,
the user equipment and the Node B starting (160, 270, 360, 460, 580, 760) the compressed mode, comprising: the user equipment and the Node B generating (160, 270, 360, 460, 580, 760) a transmission gap according to the information of the transmission gap pattern sequence; and, the user equipment performing (160, 270, 360, 460, 580, 760) measurement in the transmission gap.

2. The method according to claim 1, wherein,
the threshold condition of starting the compressed mode comprises a user equipment transmission power threshold value of starting the compressed mode;
the step of the user equipment monitoring whether the user equipment meets the threshold condition of starting the compressed mode and informing a Node B when the threshold condition of starting the compressed mode is met comprises: the user equipment monitoring whether the transmission power of the user equipment is greater than or equal to the user equipment transmission power threshold value, and if yes, informing the Node B.

3. The method according to claim 1, wherein,
the threshold condition of starting the compressed mode comprises a user equipment transmission power threshold value of starting the compressed mode and duration time;
the step of the user equipment monitoring whether the user equipment meets the threshold condition of starting the compressed mode and informing a Node B when the threshold condition of starting the compressed mode is met comprises: the user equipment monitoring whether the transmission power of the user equipment is greater than or equal to the user equipment transmission power threshold value and is kept for the duration time, and if yes, informing the Node B.

4. The method according to claim 1, wherein,
the radio network controller informs (120, 320, 420, 720) the user equipment of the threshold condition and the information of the transmission gap pattern sequence through a radio resource control, RRC, protocol layer control signaling;
the radio network controller informs (130, 330, 430, 730) the Node B of the information of the transmission gap pattern sequence through a Node B application portion, NBAP, protocol layer control signaling.

5. The method according to claim 1, wherein,
the step of informing the Node B when the threshold condition is met comprises:
when the threshold condition is met, the user equipment sending (150, 250, 450, 560) information for indicating that the threshold condition is met to the Node B through a high-speed dedicated physical control channel, HS-DPCCH; or,
when the threshold condition is met, the user equipment sending starting (350, 750) information for indicating that a transmission gap pattern sequence is started to the Node B through the HS-DPCCH.

6. The method according to claim 5, wherein,
after the user equipment sends the information for indicating that the threshold condition is met to the Node B and before the user equipment and the Node B starts the compressed mode, the method further comprises:
the Node B sending (260, 570) the starting information for indicating that the transmission gap pattern sequence is started to the user equipment through a high-speed shared control channel order of a high-speed shared control channel, HS-SCCH.

7. The method according to claim 1, wherein,
after the user equipment starts the compressed mode, the method further comprises:
after the user equipment completes (770) measurement, the user equipment sending (780) stopping information for indicating that a transmission gap pattern sequence is stopped to the Node B through HS-DPCCH;
the user equipment and the Node B stopping (790) the compressed mode.

8. The method according to any one of claims 1-7, further comprising:
the ratio network controller presetting (410, 520) a threshold condition of stopping the compressed mode and informing (420, 540) the user equipment; wherein, the threshold condition of stopping the compressed mode is a threshold condition based on transmission power of the user equipment;
after the user equipment starts the compressed mode, the user equipment monitoring (470, 590) whether the user equipment meets the threshold condition, and informing (480, 600) a Node B when the threshold condition is met; and
the user equipment and the Node B stopping (490, 620) the compressed mode.

9. The method according to claim 8, wherein,
the threshold condition of stopping the compressed mode comprises a user equipment transmission power threshold value of stopping the compressed mode;
the step of the user equipment monitoring whether the user equipment meets the threshold condition and informing a Node B when the threshold condition is met comprises: the user equipment monitoring whether the transmission power of the user equipment is less than or equal to the user equipment transmission power threshold value, and if yes, informing the Node B;
or
the threshold condition of stopping the compressed mode comprises a user equipment transmission power threshold value of stopping the compressed mode and duration time;
the step of the user equipment monitoring whether the user equipment meets the threshold condition and informing a Node B when the threshold condition is met comprises: the user equipment monitoring whether the transmission power of the user equipment is less than or equal to the user equipment transmission power threshold value and is kept for the duration time, and if yes, informing the Node B.

10. The method according to claim 8, wherein,
the step of informing the Node B when the threshold condition is met comprises:
when the threshold condition is met, the user equipment sending (480, 600) information for indicating that the threshold condition is met to the Node B through a high-speed dedicated physical control channel, HS-DPCCH; or,
when the threshold condition is met, the user equipment sending stopping information for indicating that a transmission gap pattern sequence is stopped to the Node B through the HS-DPCCH.

11. The method according to claim 10, wherein,
after the user equipment sends the information for indicating that the threshold condition is met to the Node B through HS-DPCCH physical channel and before the user equipment and the Node B stops the compressed mode, the method further comprises:
the Node B sending (610) the stopping information for indicating that the transmission gap pattern sequence is stopped to the user equipment through a high-speed shared control channel order of a high-speed shared control channel, HS-SCCH.

12. A user equipment, comprising: a monitoring module (81) and a compressed mode module (82), wherein:
the monitoring module (81) is configured to receive a threshold condition of starting a compressed mode preset by a ratio network controller, monitor whether the user equipment meets the threshold condition of starting the compressed mode, and inform a Node B and the compressed mode module when the threshold condition of starting the compressed mode is met; wherein, the threshold condition of starting the compressed mode is a threshold condition based on transmission power of the user equipment;
the compressed mode module (82) is configured to start the compressed mode according to a notification of the monitoring module (81) by: generating a transmission gap according to information of the transmission gap pattern sequence; and, performing measurement in the transmission gap, wherein the information of the transmission gap pattern sequence is agreed by the user equipment and a Node B in advance.

13. The user equipment according to claim 12, wherein,
the monitoring module (81) is further configured to receive a threshold condition of stopping the compressed mode preset by the ratio network controller, monitor whether the user equipment meets the threshold condition of stopping the compressed mode, and inform the Node B and the compressed mode module when the threshold condition of stopping the compressed mode is met; wherein, the threshold condition of stopping the compressed mode is a threshold condition based on the transmission power of the user equipment;
the compressed mode module (82) is configured to stop the compressed mode according to a notification of the monitoring module;
or
the monitoring module (81) is further configured to inform the Node B and the compressed mode module when the compressed mode module completes measurement, after the compressed mode module starts the compressed mode;
the compressed mode module (82) is further configured to stop the compressed mode according to a notification of the monitoring module.

## Patentansprüche

1. Ein Verfahren zum Starten und Beenden eines komprimierten Modus, das Folgendes beinhaltet:
einen Funknetzwerkregler (110, 210, 310, 410, 510, 710), der eine Schwellenbedingung des Startens des komprimierten Modus voreinstellt und ein Endgerät informiert (120, 230, 320, 420, 540, 710); wobei die Schwellenbedingung des Startens des komprimierten Modus eine Schwellenbedingung basierend auf der Übertragungsleistung des Endgeräts ist;
das Endgerät, das überwacht (140, 240, 340, 440, 550, 740), ob das Endgerät die Schwellenbedingung des Startens des komprimierten Modus erfüllt, und einen Knoten B informiert (150, 250, 350, 450, 560, 750), wenn die Schwellenbedingung des Startens des komprimierten Modus erfüllt ist;
wobei das Endgerät und der Knoten B im Voraus eine Vereinbarung über die verwendeten Informationen der Übertragungslückenmustersequenz treffen (220, 530), wenn der komprimierte Modus gestartet ist; und
das Endgerät und der Knoten B den komprimierten Modus starten (160, 270, 360, 460, 580, 760), beinhaltend: das Endgerät und der Knoten B erzeugen (160, 270, 360, 460, 580, 760) eine Übertragungslücke gemäß den Informationen der Übertragungslückenmustersequenz; und das Endgerät führt eine Messung in der Übertragungslücke durch (160, 270, 360, 460, 580, 760).

2. Verfahren gemäß Anspruch 1, wobei
die Schwellenbedingung des Startens des komprimierten Modus einen Endgerät-Übertragungsleistungsschwellenwert des Startens des komprimierten Modus beinhaltet; der Schritt des Überwachens durch das Endgerät, ob das Endgerät die Schwellenbedingung des Startens des komprimierten Modus erfüllt, und des Informierens eines Knotens B, wenn die Schwellenbedingung des Startens des komprimierten Modus erfüllt ist, Folgendes beinhaltet: das Endgerät überwacht, ob die Übertragungsleistung des Endgeräts größer als der Endgerät-Übertragungsleistungsschwellenwert oder gleich ist, und informiert, falls ja, den Knoten B.

3. Verfahren gemäß Anspruch 1, wobei
die Schwellenbedingung des Startens des komprimierten Modus einen Endgerät-Übertragungsleistungsschwellenwert des Startens des komprimierten Modus und eine Zeitdauer beinhaltet;
der Schritt des Überwachens durch das Endgerät, ob das Endgerät die Schwellenbedingung des Startens des komprimierten Modus und des Informierens eines Knotens B, wenn die Schwellenbedingung des Startens des komprimierten Modus erfüllt ist, Folgendes beinhaltet: das Endgerät überwacht, ob die Übertragungsleistung des Endgeräts größer als der Endgerät-Übertragungsleistungsschwellenwert oder gleich ist und für die Zeitdauer gehalten wird, und informiert, falls ja, den Knoten B.

4. Verfahren gemäß Anspruch 1, wobei
der Funknetzwerkregler das Endgerät über die Schwellenbedingung und die Informationen der Übertragungslückenmustersequenz durch eine Funkressourcensteuerung(RRC)-Protokollschichtsteuersignalisierung informiert (120, 320, 420, 720);
der Funknetzwerkregler den Knoten B über die Informationen der Übertragungslückenmustersequenz durch eine Knoten B-Anwendungsteil, NBAP, Protokollschichtsteuersignalisierung informiert (130, 330, 430, 730).

5. Verfahren gemäß Anspruch 1, wobei
der Schritt des Informierens des Knotens B, wenn die Schwellenbedingung erfüllt ist, Folgendes beinhaltet:
wenn die Schwellenbedingung erfüllt ist, sendet (150, 250, 450, 560) das Endgerät Informationen zum Anzeigen, dass die Schwellenbedingung erfüllt ist, durch einen dedizierten physikalischen Hochgeschwindigkeitssteuerkanal, HS-DPCCH, an den Knoten B; oder
wenn die Schwellenbedingung erfüllt ist, sendet das Endgerät Startinformationen (350, 750) zum Anzeigen, dass eine Übertragungslückenmustersequenz gestartet ist, durch den HS-DPCCH an den Knoten B.

6. Verfahren gemäß Anspruch 5, wobei
nach dem Senden der Informationen durch das Endgerät zum Anzeigen, dass die Schwellenbedingung erfüllt ist, an den Knoten B und bevor das Endgerät und der Knoten B den komprimierten Modus starten, das Verfahren ferner Folgendes beinhaltet: Senden (260, 570) der Startinformationen zum Anzeigen, dass die Übertragungslückenmustersequenz gestartet ist, durch den B-Knoten durch eine geteilte Hochgeschwindigkeits-Steuerkanalordnung eines geteilten Hochgeschwindigkeits-Steuerkanals, HS-SCCH, an das Endgerät.

7. Verfahren gemäß Anspruch 1, wobei
nach dem Starten des komprimierten Modus durch das Endgerät das Verfahren ferner Folgendes beinhaltet:
nach dem Abschließen (770) der Messung durch das Endgerät Senden (780) durch das Endgerät der Stoppinformationen zum Anzeigen, dass eine Übertragungslückenmustersequenz beendet ist, durch HS-DPCCH an den Knoten B; wobei das Endgerät und der Knoten B den komprimierten Modus beenden (790)..

8. Verfahren gemäß einem der Ansprüche 1-7, das ferner Folgendes beinhaltet:
Voreinstellen (410, 520) durch den Funknetzwerkregler einer Schwellenbedingung des Beendens des komprimierten Modus und Informieren (420, 540) des Endgeräts; wobei die Schwellenbedingung des Beendens des komprimierten Modus eine Schwellenbedingung basierend auf einer Übertragungsleistung des Endgeräts ist;
Überwachen (470, 590), nachdem das Endgerät den komprimierten Modus startet, durch das Endgerät, ob das Endgerät die Schwellenbedingung erfüllt, und Informieren (480, 600) eines Knotens B, wenn die Schwellenbedingung erfüllt ist; und Beenden (490, 620) des komprimierten Modus durch das Endgerät und den Knoten B.

9. Verfahren gemäß Anspruch 8, wobei
die Schwellenbedingung des Beendens des komprimierten Modus einen Endgerät-Übertragungsleistungsschwellenwert des Beendens des komprimierten Modus beinhaltet;
der Schritt des Überwachens durch das Endgerät, ob das Endgerät die Schwellenbedingung erfüllt, und des Informierens eines Knotens B, wenn die Schwellenbedingung erfüllt ist, Folgendes beinhaltet: Überwachen durch das Endgerät, ob die Übertragungsleistung des Endgeräts geringer als der Endgerät-Übertragungsleistungsschwellenwert ist oder gleich ist und falls ja, Informieren des Knotens B;
oder
die Schwellenbedingung des Beendens des komprimierten Modus einen Endgerät-Übertragungsleistungsschwellenwert des Beendens des komprimierten Modus und eine Zeitdauer beinhaltet;
wobei der Schritt des Überwachens durch das Endgerät, ob das Endgerät die Schwellenbedingung erfüllt, und das Informieren eines Knotens B, wenn die Schwellenbedingung erfüllt ist, Folgendes beinhaltet: Überwachen durch das Endgerät, ob die Übertragungsleistung des Endgeräts geringer als der Endgerät-Übertragungsleistungsschwellenwert ist oder gleich ist und für die Zeitdauer gehalten wird, und falls ja, Informieren des Knotens B.

10. Verfahren gemäß Anspruch 8, wobei
der Schritt des Informierens des Knotens B, wenn die Schwellenbedingung erfüllt ist, Folgendes beinhaltet:
wenn die Schwellenbedingung erfüllt ist, Senden (480, 600) von Informationen durch das Endgerät zum Anzeigen, dass die Schwellenbedingung erfüllt ist, durch einen dedizierten physikalischen Hochgeschwindigkeitssteuerkanal, HS-DPCCH, an den Knoten B; oder
wenn die Schwellenbedingung erfüllt ist, Senden der Stoppinformationen durch das Endgerät zum Anzeigen, dass eine Übertragungslückenmustersequenz beendet ist, durch den HS-DPCCH an den Knoten B.

11. Verfahren gemäß Anspruch 10, wobei
nach dem Senden der Informationen durch das Endgerät zum Anzeigen, dass die Schwellenbedingung erfüllt ist, durch den physikalischen HS-DPCCH-Kanal an den Knoten B und bevor das Endgerät und der Knoten B den komprimierten Modus beenden, das Verfahren ferner Folgendes beinhaltet:
Senden (610) der Stoppinformationen zum Anzeigen, dass die Übertragungslückenmustersequenz beendet ist, durch den Knoten B durch eine geteilte Hochgeschwindigkeits-Steuerkanalanordnung eines geteilten Hochgeschwindigkeitskontrollkanals, HS-SCCH, an das Endgerät.

12. Ein Endgerät, das Folgendes beinhaltet: ein Überwachungsmodul (81) und ein Modul des komprimierten Modus (82), wobei:
das Überwachungsmodul (81) konfiguriert ist, um eine Schwellenbedingung des Startens eines komprimierten Modus, voreingestellt durch einen Funknetzwerkregler, zu empfangen, zu überwachen, ob das Endgerät die Schwellenbedingungen des Startens des komprimierten Modus erfüllt, und einen Knoten B und das Modul des komprimierten Modus zu informieren, wenn die Schwellenbedingung des Startens des komprimierten Modus erfüllt ist; wobei die Schwellenbedingung des Startens des komprimierten Modus eine Schwellenbedingung, basierend auf der Übertragungsleistung des Endgeräts, ist;
das Modul des komprimierten Modus (82) konfiguriert ist, um den komprimierten Modus gemäß einer Benachrichtigung des überwachenden Moduls (81) durch Folgendes zu starten: Erzeugen einer Übertragungslücke gemäß Informationen der Übertragungslückenmustersequenz; und Durchführen von Messungen in der Übertragungslücke, wobei die Informationen der Übertragungslückenmustersequenz im Voraus durch das Endgerät und einen Knoten B vereinbart werden.

13. Endgerät gemäß Anspruch 12, wobei:
das Überwachungsmodul (81) ferner konfiguriert ist, um eine Schwellenbedingung des Beendens des komprimierten Modus, voreingestellt durch den Funknetzwerkregler, zu empfangen, zu überwachen, ob das Endgerät die Schwellenbedingung des Beendens des komprimierten Modus erfüllt, und den Knoten B und das Modul des komprimierten Modus zu informieren, wenn die Schwellenbedingung des Beendens des komprimierten Modus erfüllt ist; wobei die Schwellenbedingung des Beendens des komprimierten Modus eine Schwellenbedingung basierend auf der Übertragungsleistung des Endgeräts ist;
das Modul des komprimierten Modus (82) konfiguriert ist, um den komprimierten Modus gemäß einer Benachrichtigung des Überwachungsmoduls zu beenden;
oder
das Überwachungsmodul (81) ferner konfiguriert ist, um den Knoten B und das Modul des komprimierten Modus zu informieren, wenn das Modul des komprimierten Modus eine Messung abschließt, nachdem das Modul des komprimierten Modus den komprimierten Modus startet;
das Modul des komprimierten Modus (82) ferner konfiguriert ist, um den komprimierten Modus gemäß einer Benachrichtigung des Überwachungsmoduls zu beenden.

## Revendications

1. Un procédé pour démarrer et arrêter un mode compressé, comprenant :
le fait pour un dispositif de commande de réseau radio de prédéfinir (110, 210, 310, 410, 510, 710) une condition seuil de démarrage du mode compressé et d'informer (120, 230, 320, 420, 540, 710) un équipement utilisateur ; dans lequel, la condition seuil de démarrage du mode compressé est une condition seuil basée sur la puissance d'émission de l'équipement utilisateur ;
le fait pour l'équipement utilisateur de surveiller (140, 240, 340, 440, 550, 740) si l'équipement utilisateur remplit la condition seuil de démarrage du mode compressé, et
d'informer (150, 250, 350, 450, 560, 750) un Noeud B lorsque la condition seuil de démarrage du mode compressé est remplie ;
le fait pour l'équipement utilisateur et le Noeud B d'arriver (220, 530) à un accord préalablement aux informations de la séquence de motifs d'intervalle de transmission utilisée lorsque le mode compressé est démarré ; et,
le fait pour l'équipement utilisateur et le Noeud B de démarrer (160, 270, 360, 460, 580, 760) le mode compressé, comprenant : le fait pour l'équipement utilisateur et le Noeud B de générer (160, 270, 360, 460, 580, 760) un intervalle de transmission selon les informations de la séquence de motifs d'intervalle de transmission ; et, le fait pour l'équipement utilisateur d'effectuer (160, 270, 360, 460, 580, 760) une mesure dans l'intervalle de transmission.

2. Le procédé selon la revendication 1, dans lequel,
la condition seuil de démarrage du mode compressé comprend une valeur seuil de puissance d'émission de l'équipement utilisateur pour le démarrage du mode compressé ;
l'étape consistant pour l'équipement utilisateur à surveiller si l'équipement utilisateur remplit la condition seuil de démarrage du mode compressé et informer un Noeud B lorsque la condition seuil de démarrage du mode compressé est remplie comprend : le fait pour l'équipement utilisateur de surveiller si la puissance d'émission de l'équipement utilisateur est supérieure ou égale à la valeur seuil de puissance d'émission de l'équipement utilisateur, et si oui, d'informer le Noeud B.

3. Le procédé selon la revendication 1, dans lequel,
la condition seuil de démarrage du mode compressé comprend une valeur seuil de puissance d'émission de l'équipement utilisateur pour le démarrage du mode compressé et une durée ;
l'étape consistant pour l'équipement utilisateur à surveiller si l'équipement utilisateur remplit la condition seuil de démarrage du mode compressé et informer un Noeud B lorsque la condition seuil de démarrage du mode compressé est remplie comprend : le fait pour l'équipement utilisateur de surveiller si la puissance d'émission de l'équipement utilisateur est supérieure ou égale à la valeur seuil de puissance d'émission de l'équipement utilisateur et si elle est maintenue pendant la durée, et si oui, d'informer le Noeud B.

4. Le procédé selon la revendication 1, dans lequel,
le dispositif de commande de réseau radio informe (120, 320, 420, 720) l'équipement utilisateur de la condition seuil et des informations de la séquence de motifs d'intervalle de transmission par le biais d'une signalisation de commande de couche de protocole de commande de ressources radio (RRC) ;
le dispositif de commande de réseau radio informe (130, 330, 430, 730) le Noeud B des informations de la séquence de motifs d'intervalle de transmission par le biais d'une signalisation de commande de couche de protocole de partie d'application de Noeud B, NBAP.

5. Le procédé selon la revendication 1, dans lequel,
l'étape consistant à informer le Noeud B lorsque la condition seuil est remplie comprend :
lorsque la condition seuil est remplie, le fait pour l'équipement utilisateur d'envoyer (150, 250, 450, 560) des informations pour indiquer que la condition seuil est remplie au Noeud B par le biais d'un canal de commande physique dédié à grande vitesse, HS-DPCCH ; ou,
lorsque la condition seuil est remplie, le fait pour l'équipement utilisateur d'envoyer des informations de démarrage (350, 750) pour indiquer qu'une séquence de motifs d'intervalle de transmission est démarrée au Noeud B par le biais du HS-DPCCH.

6. Le procédé selon la revendication 5, dans lequel,
après que l'équipement utilisateur a envoyé les informations pour indiquer que la condition seuil est remplie au Noeud B et avant que l'équipement utilisateur et le Noeud B ne démarrent le mode compressé, le procédé comprend en outre :
le fait pour le Noeud B d'envoyer (260, 570) les informations de démarrage pour indiquer que la séquence de motifs d'intervalle de transmission est démarrée à l'équipement utilisateur par le biais d'un ordre de canal de commande partagé à grande vitesse d'un canal de commande partagé à grande vitesse, HS-SCCH.

7. Le procédé selon la revendication 1, dans lequel,
après que l'équipement utilisateur a démarré le mode compressé, le procédé comprend en outre : après que l'équipement utilisateur a terminé (770) la mesure, le fait pour l'équipement utilisateur d'envoyer (780) des informations d'arrêt pour indiquer qu'une séquence de motifs d'intervalle de transmission est arrêtée au Noeud B par le biais du HS-DPCCH ; le fait pour l'équipement utilisateur et le Noeud B d'arrêter (790) le mode compressé.

8. Le procédé selon l'une quelconque des revendications 1 à 7, comprenant en outre :
le fait pour le dispositif de commande de réseau radio de prédéfinir (410, 520) une condition seuil d'arrêt du mode compressé et d'informer (420, 540) l'équipement utilisateur ; dans lequel, la condition seuil d'arrêt du mode compressé est une condition seuil basée sur la puissance d'émission de l'équipement utilisateur ;
après que l'équipement utilisateur a démarré le mode compressé, le fait pour l'équipement utilisateur de surveiller (470, 590) si l'équipement utilisateur remplit la condition seuil, et d'informer (480, 600) un Noeud B lorsque la condition seuil est remplie ; et
le fait pour l'équipement utilisateur et le Noeud B d'arrêter (490, 620) le mode compressé.

9. Le procédé selon la revendication 8, dans lequel,
la condition seuil d'arrêt du mode compressé comprend une valeur seuil de puissance d'émission de l'équipement utilisateur d'arrêt du mode compressé ;
l'étape consistant pour l'équipement utilisateur à surveiller si l'équipement utilisateur remplit la condition seuil et informer un Noeud B lorsque la condition seuil est remplie comprend : le fait pour l'équipement utilisateur de surveiller si la puissance d'émission de l'équipement utilisateur est inférieure ou égale à la valeur seuil de puissance d'émission de l'équipement utilisateur, et si oui, d'informer le Noeud B ;
ou
la condition seuil d'arrêt du mode compressé comprend une valeur seuil de puissance d'émission de l'équipement utilisateur d'arrêt du mode compressé et une durée ; l'étape consistant pour l'équipement utilisateur à surveiller si l'équipement utilisateur remplit la condition seuil et informer un Noeud B lorsque la condition seuil est remplie comprend : le fait pour l'équipement utilisateur de surveiller si la puissance d'émission de l'équipement utilisateur est inférieure ou égale à la valeur seuil de puissance d'émission de l'équipement utilisateur et si elle est maintenue pendant la durée, et si oui, d'informer le Noeud B.

10. Le procédé selon la revendication 8, dans lequel,
l'étape consistant à informer le Noeud B lorsque la condition seuil est remplie comprend :
lorsque la condition seuil est remplie, le fait pour l'équipement utilisateur d'envoyer (480, 600) des informations pour indiquer que la condition seuil est remplie au Noeud B par le biais d'un canal de commande physique dédié à grande vitesse, HS-DPCCH ;
ou,
lorsque la condition seuil est remplie, le fait pour l'équipement utilisateur d'envoyer des informations d'arrêt pour indiquer qu'une séquence de motifs d'intervalle de transmission est arrêtée au Noeud B par le biais du HS-DPCCH.

11. Le procédé selon la revendication 10, dans lequel,
après que l'équipement utilisateur a envoyé les informations pour indiquer que la condition seuil est remplie au Noeud B par le biais du canal physique HS-DPCCH et avant que l'équipement utilisateur et le Noeud B n'arrêtent le mode compressé, le procédé comprend en outre :
le fait pour le Noeud B d'envoyer (610) les informations d'arrêt pour indiquer que la séquence de motifs d'intervalle de transmission est arrêtée à l'équipement utilisateur par le biais d'un ordre de canal de commande partagé à grande vitesse d'un canal de commande partagé à grande vitesse, HS-SCCH.

12. Un équipement utilisateur, comprenant : un module de surveillance (81) et un module de mode compressé (82), dans lequel :
le module de surveillance (81) est configuré pour recevoir une condition seuil de démarrage d'un mode compressé prédéfinie par un dispositif de commande de réseau radio, surveiller si l'équipement utilisateur remplit la condition seuil de démarrage du mode compressé, et informer un Noeud B et le module de mode compressé lorsque la condition seuil de démarrage du mode compressé est remplie ; dans lequel, la condition seuil de démarrage du mode compressé est une condition seuil basée sur la puissance d'émission de l'équipement utilisateur ;
le module de mode compressé (82) est configuré pour démarrer le mode compressé selon une notification du module de surveillance (81) en : générant un intervalle de transmission selon des informations de la séquence de motifs d'intervalle de transmission ; et, effectuant une mesure dans l'intervalle de transmission, dans lequel les informations de la séquence de motifs d'intervalle de transmission font l'objet d'un accord au préalable entre l'équipement utilisateur et un Noeud.

13. L'équipement utilisateur selon la revendication 12, dans lequel,
le module de surveillance (81) est en outre configuré pour recevoir une condition seuil d'arrêt du mode compressé prédéfinie par le dispositif de commande de réseau radio, surveiller si l'équipement utilisateur remplit la condition seuil d'arrêt du mode compressé, et informer le Noeud B et le module de mode compressé lorsque la condition seuil d'arrêt du mode compressé est remplie ; dans lequel, la condition seuil d'arrêt du mode compressé est une condition seuil basée sur la puissance d'émission de l'équipement utilisateur ;
le module de mode compressé (82) est configuré pour arrêter le mode compressé selon une notification du module de surveillance ;
ou
le module de surveillance (81) est en outre configuré pour informer le Noeud B et le module de mode compressé lorsque le module de mode compressé termine la mesure, après que le module de mode compressé a démarré le mode compressé ;
le module de mode compressé (82) est en outre configuré pour arrêter le mode compressé selon une notification du module de surveillance.
